# FASCICULE DE BREVET EUROPEEN

(11) **EP 3 695 086 B1**
(45) Date de publication et mention de la délivrance du brevet: **17.11.2021**
(21) Numéro de dépôt: 18792860.1
(22) Date de dépôt: 09.10.2018
(51) Int. Cl.: E06B 9/171, E06B 9/72, H02K 15/14

(54) **ACTIONNEUR ÉLECTROMÉCANIQUE TUBULAIRE, INSTALLATION DOMOTIQUE COMPRENANT UN TEL ACTIONNEUR ET PROCÉDÉ D'ASSEMBLAGE D'UN TEL ACTIONNEUR**
ROHRMOTOR, HEIMAUTOMATISIERUNG MIT DIESEM MOTOR UND SEIN HERSTELLUNGSVERFAHREN
TUBULAR MOTOR, HOME AUTOMATION INSTALLATION COMPRISING THIS MOTOR AND PROCESS OF ITS ASSEMBLY

(30) Priorité: 10.10.2017 FR 1759465
(43) Date de publication de la demande: 19.08.2020
(73) Titulaire: Somfy Activites SA, 74300 Cluses (FR)
(72) Inventeur: SONZINI, Marc, 74200 Allinges (FR); DOCHE, Florian, 74000 Annecy (FR)
(74) Mandataire: Lavoix
(86) Numéro de dépôt international: PCT/EP2018/077463
(87) Numéro de publication internationale: WO 2019/072839

(56) Documents cités:
- FR-A1- 2 983 368
- US-B1- 6 842 966

## Description

La présente invention concerne un actionneur électromécanique tubulaire, une installation domotique de fermeture ou de protection solaire comprenant un tel actionneur, ainsi qu'un procédé d'assemblage d'un tel actionneur.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document FR 2 983 368 A1 qui décrit un actionneur électromécanique tubulaire pour une installation domotique de fermeture ou de protection solaire. L'actionneur électromécanique comprend un ensemble et un carter. L'ensemble comprend une unité électronique de contrôle, un moteur électrique, un réducteur et un arbre de sortie. Le carter est creux et configuré pour loger l'ensemble. Le carter comprend une première extrémité et une deuxième extrémité. La deuxième extrémité est opposée à la première extrémité. L'arbre de sortie dépasse du carter au niveau de la première extrémité du carter, dans une configuration assemblée de l'actionneur électromécanique. L'actionneur électromécanique comprend également un élément d'obturation de la deuxième extrémité du carter. L'élément d'obturation dépasse du carter au niveau de la deuxième extrémité du carter, dans la configuration assemblée de l'actionneur électromécanique.

L'assemblage d'un tel actionneur électromécanique prévoit un débattement axial de l'unité électronique de contrôle, du moteur électrique et du réducteur, l'un par rapport à l'autre, suite à l'introduction de l'ensemble à l'intérieur du carter.

En outre, l'assemblage d'un tel actionneur électromécanique prévoit un rattrapage du jeu axial, lors du montage de l'élément d'obturation.

Cependant, cet actionneur électromécanique présente l'inconvénient de rattraper le jeu axial par l'intermédiaire d'une opération de sertissage réalisée au niveau de la première extrémité du carter, suite à la fixation de l'élément d'obturation par rapport au carter, de sorte à enfoncer des zones déformées du carter à l'intérieur d'encoches ménagées dans le réducteur et à repousser le réducteur, le moteur électrique et l'unité électronique de contrôle vers l'élément d'obturation.

Par conséquent, une telle configuration d'assemblage d'un actionneur électromécanique, dans laquelle un débattement axial de l'unité électronique de contrôle, du moteur électrique et du réducteur, l'un par rapport à l'autre, est prévu, peut présenter un risque de déconnexion électrique de l'unité électronique de contrôle par rapport à un câble d'alimentation électrique et par rapport au moteur électrique, notamment lors d'un choc de l'actionneur électromécanique, pouvant intervenir lors d'une manipulation ou du transport de l'actionneur électromécanique, ou lors d'un fonctionnement anormal de l'actionneur électromécanique.

La déconnexion électrique de l'unité électronique de contrôle par rapport au câble d'alimentation électrique ou par rapport au moteur électrique provoque une panne de l'actionneur électromécanique.

La présente invention a pour but de résoudre les inconvénients précités et de proposer un actionneur électromécanique tubulaire, une installation domotique de fermeture ou de protection solaire comprenant un tel actionneur, ainsi qu'un procédé d'assemblage d'un tel actionneur, permettant d'améliorer la tenue des organes de l'actionneur électromécanique disposés à l'intérieur du carter et d'empêcher la déconnexion électrique d'une unité électronique de contrôle par rapport à un câble d'alimentation électrique et par rapport à un moteur électrique.

A cet effet, la présente invention vise, selon un premier aspect, un actionneur électromécanique tubulaire pour une installation domotique de fermeture ou de protection solaire, l'actionneur électromécanique comprenant au moins :
- un ensemble, l'ensemble comprenant :
   o une unité électronique de contrôle,
   o un moteur électrique,
   o un réducteur, et
   o un arbre de sortie,
- un carter, le carter étant creux et configuré pour loger l'ensemble, le carter comprenant une première extrémité et une deuxième extrémité, la deuxième extrémité étant opposée à la première extrémité, l'arbre de sortie dépassant du carter au niveau de la première extrémité du carter, dans une configuration assemblée de l'actionneur électromécanique, et
- un élément d'obturation de la deuxième extrémité du carter, l'élément d'obturation dépassant du carter au niveau de la deuxième extrémité du carter, dans la configuration assemblée de l'actionneur électromécanique.

Selon l'invention, l'actionneur électromécanique comprend également un élément d'interface, l'élément d'interface étant disposé entre l'élément d'obturation et l'unité électronique de contrôle. En outre, l'élément d'interface comprend un logement, à l'intérieur duquel est disposé un élément d'inhibition d'un jeu entre l'élément d'obturation et l'élément d'interface, suivant la direction axiale de l'actionneur électromécanique.

Ainsi, l'élément d'inhibition du jeu entre l'élément d'obturation et l'élément d'interface, suivant la direction axiale de l'actionneur électromécanique, permet d'améliorer la tenue des organes de l'actionneur électromécanique disposés à l'intérieur du carter et de s'affranchir du risque de déconnexion électrique de l'unité électronique de contrôle par rapport à un câble d'alimentation électrique et par rapport au moteur électrique, notamment lors d'un choc de l'actionneur électromécanique, pouvant intervenir lors d'une manipulation ou du transport de l'actionneur électromécanique, ou lors d'un fonctionnement anormal de l'actionneur électromécanique.

De cette manière, une telle construction de l'actionneur électromécanique permet d'inhiber le jeu entre l'élément d'obturation et l'élément d'interface, suivant la direction axiale de l'actionneur électromécanique, suite à l'assemblage de l'actionneur électromécanique, de sorte à garantir un état fonctionnel de l'actionneur électromécanique, au cours des différentes phases de vie de l'actionneur électromécanique.

En outre, l'élément d'inhibition permet de bloquer en translation l'élément d'interface par rapport à l'élément d'obturation.

Selon une caractéristique avantageuse de l'invention, l'élément d'obturation comprend un logement débouchant au niveau d'une première face de l'élément d'obturation et au niveau d'une deuxième face de l'élément d'obturation, le logement de l'élément d'obturation étant disposé en vis-à-vis de l'élément d'inhibition, dans la configuration assemblée de l'actionneur électromécanique, de sorte à permettre un ajustement en position de l'élément d'inhibition à partir de l'extérieur de l'élément d'obturation.

Selon une autre caractéristique avantageuse de l'invention, l'élément d'inhibition est configuré pour coopérer avec une face de l'élément d'obturation, suite à un ajustement en position de l'élément d'inhibition par rapport à l'élément d'obturation, suivant la direction axiale de l'actionneur électromécanique, de sorte à inhiber le jeu entre l'élément d'obturation et l'élément d'interface.

Selon une autre caractéristique avantageuse de l'invention, l'élément d'inhibition est une vis. En outre, le logement de l'élément d'interface est un alésage.

Selon une autre caractéristique avantageuse de l'invention, l'élément d'obturation comprend une butée configurée pour coopérer avec le carter, au niveau de la deuxième extrémité du carter, dans la configuration assemblée de l'actionneur.

Selon une autre caractéristique avantageuse de l'invention, l'actionneur électromécanique comprend également un élément de maintien, l'élément de maintien étant assemblé au niveau de la première extrémité du carter, l'élément de maintien comprenant une première butée configurée pour coopérer avec l'ensemble, dans la configuration assemblée de l'actionneur électromécanique.

Selon une autre caractéristique avantageuse de l'invention, l'élément de maintien comprend une deuxième butée configurée pour coopérer avec le carter, au niveau de la première extrémité du carter, dans la configuration assemblée de l'actionneur électromécanique.

La présente invention vise, selon un deuxième aspect, une installation domotique de fermeture ou de protection solaire comprenant un écran enroulable sur un tube d'enroulement entraîné en rotation par un actionneur électromécanique tubulaire conforme à l'invention.

Cette installation domotique présente des caractéristiques et avantages analogues à ceux décrits précédemment en relation avec l'actionneur électromécanique tubulaire tel que mentionné ci-dessus.

La présente invention vise, selon un troisième aspect, un procédé d'assemblage d'un actionneur électromécanique tubulaire pour une installation domotique de fermeture ou de protection solaire,
l'actionneur électromécanique comprenant au moins :
- un ensemble, l'ensemble comprenant :
   o une unité électronique de contrôle,
   o un moteur électrique,
   o un réducteur, et
   o un arbre de sortie,
- un carter, le carter étant creux et configuré pour loger l'ensemble, le carter comprenant une première extrémité et une deuxième extrémité, la deuxième extrémité étant opposée à la première extrémité, l'arbre de sortie dépassant du carter au niveau de la première extrémité du carter, dans une configuration assemblée de l'actionneur électromécanique, et
- un élément d'obturation de la deuxième extrémité du carter, l'élément d'obturation dépassant du carter au niveau de la deuxième extrémité du carter, dans la configuration assemblée de l'actionneur électromécanique.

Le procédé comprend au moins les étapes suivantes :
a) assemblage de l'ensemble à l'extérieur du carter,
b) introduction de l'ensemble à l'intérieur du carter, à partir de la deuxième extrémité du carter et jusqu'au dépassement de l'arbre de sortie par rapport à la première extrémité du carter.

Selon l'invention, le procédé comprend également au moins :
- suite à l'étape a) d'assemblage de l'ensemble et avant l'étape b) d'introduction de l'ensemble à l'intérieur du carter, une étape c) d'assemblage d'un élément d'interface sur l'unité électronique de contrôle appartenant à l'ensemble,
- suite à l'étape c) d'assemblage de l'élément d'interface sur l'unité électronique de contrôle et suite à l'étape b) d'introduction de l'ensemble à l'intérieur du carter, une étape d) d'assemblage de l'élément d'obturation sur le carter, au niveau de la deuxième extrémité du carter, de sorte que l'élément d'interface est disposé entre l'élément d'obturation et l'unité électronique de contrôle, et
- suite à l'étape d) d'assemblage de l'élément d'obturation sur le carter, une étape e) d'inhibition d'un jeu entre l'élément d'obturation et l'élément d'interface, suivant la direction axiale de l'actionneur électromécanique, par l'intermédiaire d'un élément d'inhibition disposé à l'intérieur d'un logement ménagé dans l'élément d'interface.

Ce procédé d'assemblage d'un actionneur électromécanique tubulaire présente des caractéristiques et avantages analogues à ceux décrits précédemment en relation avec l'actionneur électromécanique tubulaire selon l'invention et tel que mentionné ci-dessus.

Selon une caractéristique avantageuse de l'invention, l'étape e) d'inhibition du jeu entre l'élément d'obturation et l'élément d'interface comprend une sous-étape e1) d'ajustement en position de l'élément d'interface par rapport à l'élément d'obturation, suivant la direction axiale de l'actionneur électromécanique.

Selon une autre caractéristique avantageuse de l'invention, dans le cas où l'élément d'inhibition est une vis, la sous-étape e1) d'ajustement en position de l'élément d'interface par rapport à l'élément d'obturation est mise en œuvre par une opération de dévissage ou de vissage de la vis.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation domotique conforme à un premier mode de réalisation de l'invention ;
- la figure 2 est une vue schématique en perspective de l'installation domotique illustrée à la figure 1 ;
- la figure 3 est une vue schématique en coupe axiale et partielle de l'installation domotique illustrée aux figures 1 et 2 montrant un actionneur électromécanique tubulaire de l'installation ;
- la figure 4 est une vue schématique en coupe de l'actionneur électromécanique illustré à la figure 3, selon un plan de coupe décalé par rapport à un axe longitudinal de l'actionneur ;
- la figure 5 est une vue schématique en coupe partielle de l'actionneur électromécanique illustré à la figure 3, selon un plan de coupe passant par l'axe longitudinal de l'actionneur ;
- la figure 6 est une vue schématique en coupe et en perspective d'une partie de l'actionneur électromécanique illustré aux figures 4 et 5, représentant un élément d'obturation, un élément d'interface et un élément d'inhibition ;
- la figure 7 est une vue schématique en perspective de l'élément d'interface illustré à la figure 6 ;
- la figure 8 est une vue schématique en coupe et en perspective de l'élément d'interface illustré à la figure 7, sur lequel est assemblé l'élément d'inhibition ;
- la figure 9 est une vue schématique éclatée et en perspective d'une partie de l'actionneur électromécanique illustré aux figures 4 et 5, représentant une partie d'un carter de l'actionneur électromécanique, un réducteur, un arbre de sortie, un embout et un élément de maintien ;
- la figure 10 est une vue schématique éclatée et en perspective d'une partie de l'actionneur électromécanique illustré aux figures 4 et 5, représentant une partie du carter de l'actionneur électromécanique, une couronne, l'élément d'obturation, l'élément d'interface et l'élément d'inhibition ;
- la figure 11 est une vue schématique de l'actionneur électromécanique illustré aux figures 4 et 5, représentative d'un procédé d'assemblage de cet actionneur ;
- la figure 12 est une vue en coupe et en perspective d'une partie de l'actionneur électromécanique illustré aux figures 4 et 5, selon un plan de coupe décalé par rapport à l'axe longitudinal de l'actionneur, représentant l'élément d'obturation, la couronne, l'élément d'interface et l'élément d'inhibition, selon un deuxième mode de réalisation ; et
- la figure 13 est une vue en coupe et en perspective d'une partie de l'actionneur électromécanique illustré aux figures 4 et 5, représentant l'élément d'obturation, la couronne, l'élément d'interface et l'élément d'inhibition, selon un troisième mode de réalisation.

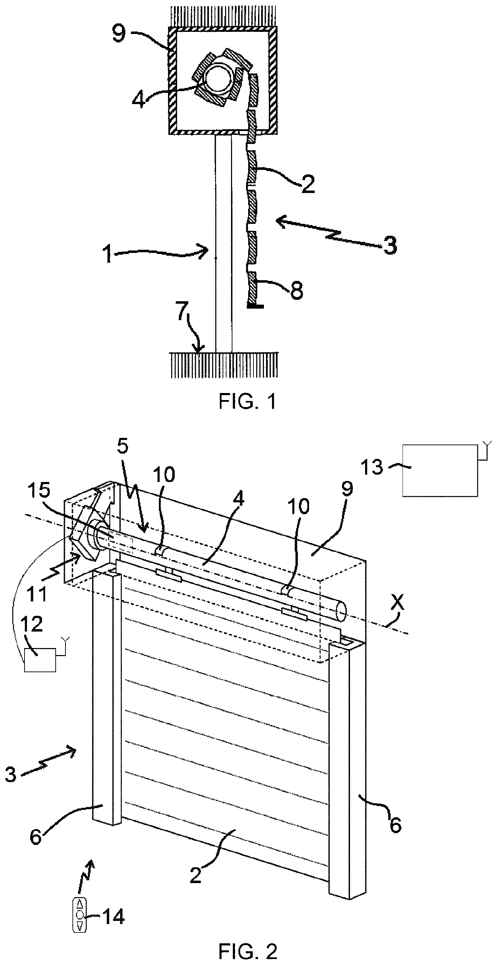

On décrit tout d'abord, en référence aux figures 1 et 2, une installation domotique conforme à l'invention et installée dans un bâtiment comportant une ouverture 1, fenêtre ou porte, équipée d'un écran 2 appartenant à un dispositif d'occultation 3, en particulier un volet roulant motorisé.

Le dispositif d'occultation 3 peut être un volet roulant, un store en toile ou avec des lames orientables, ou encore un portail roulant. La présente invention s'applique à tous les types de dispositif d'occultation.

On décrit, en référence aux figures 1 et 2, un volet roulant conforme à un premier mode de réalisation de l'invention.

L'écran 2 du dispositif d'occultation 3 est enroulé sur un tube d'enroulement 4 entraîné par un dispositif d'entraînement motorisé 5 et mobile entre une position enroulée, en particulier haute, et une position déroulée, en particulier basse.

L'écran 2 mobile du dispositif d'occultation 3 est un écran de fermeture, d'occultation et/ou de protection solaire, s'enroulant sur le tube d'enroulement 4 dont le diamètre intérieur est supérieur au diamètre externe d'un actionneur électromécanique 11, de sorte que l'actionneur électromécanique 11 puisse être inséré dans le tube d'enroulement 4, lors de l'assemblage du dispositif d'occultation 3.

Le dispositif d'entraînement motorisé 5 comprend l'actionneur électromécanique 11, en particulier de type tubulaire, permettant de mettre en rotation le tube d'enroulement 4, de sorte à dérouler ou enrouler l'écran 2 du dispositif d'occultation 3.

Le dispositif d'occultation 3 comprend le tube d'enroulement 4 pour enrouler l'écran 2. Dans l'état monté, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux glissières latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3, et la position basse déroulée correspond à la mise en appui de la lame d'extrémité finale 8 du tablier 2 du volet roulant 3 contre un seuil 7 de l'ouverture 1.

La première lame du tablier 2 du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Le dispositif d'entraînement motorisé 5 est commandé par une unité de commande. L'unité de commande peut être, par exemple, une unité de commande locale 12, où l'unité de commande locale 12 peut être reliée en liaison filaire ou non filaire avec une unité de commande centrale 13. L'unité de commande centrale 13 pilote l'unité de commande locale 12, ainsi que d'autres unités de commande locales similaires et réparties dans le bâtiment.

L'unité de commande centrale 13 peut être en communication avec une station météorologique déportée à l'extérieur du bâtiment, incluant, notamment, un ou plusieurs capteurs pouvant être configurés pour déterminer, par exemple, une température, une luminosité ou encore une vitesse de vent.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par la télécommande 14.

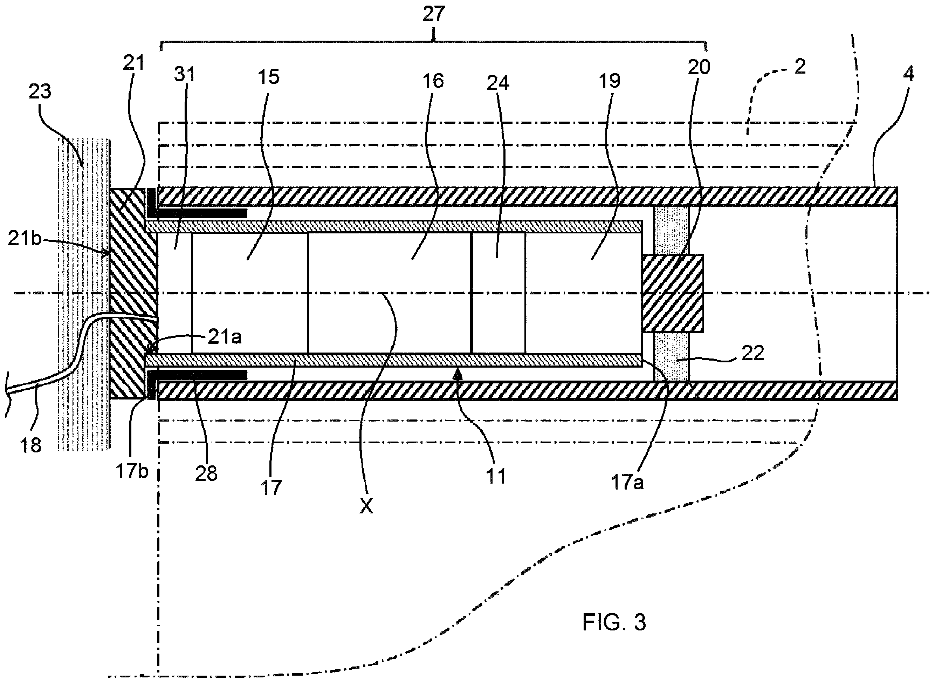

On décrit à présent, plus en détail et en référence aux figures 3 à 11, l'actionneur électromécanique 11 appartenant à l'installation domotique des figures 1 et 2.

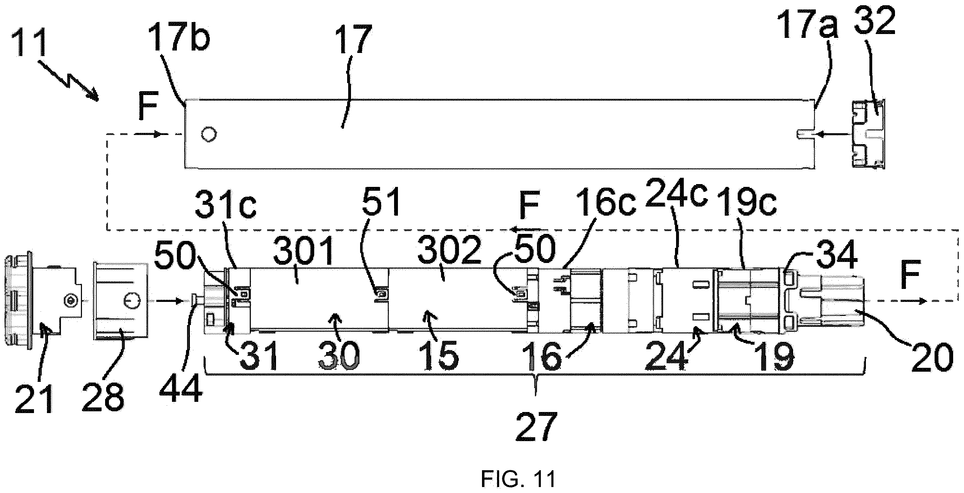

L'actionneur électromécanique 11 comprend une unité électronique de contrôle 15, un moteur électrique 16, un réducteur 19 et un arbre de sortie 20, formant un ensemble 27, tel qu'illustré aux figures 3 et 11.

Ainsi, l'ensemble 27 est formé par des organes de l'actionneur électromécanique 11, dont l'unité électronique de contrôle 15, le moteur électrique 16, le réducteur 19 et l'arbre de sortie 20 font partie intégrante.

Le moteur électrique 16 comprend un rotor et un stator, non représentés, positionnés de manière coaxiale autour d'un axe de rotation X, qui est également l'axe de rotation du tube d'enroulement 4 en configuration montée du dispositif d'entraînement motorisé 5.

Ici, le réducteur 19 est du type à engrenages.

En pratique, le moteur électrique 16 comprend un arbre de sortie, non représenté, configuré pour coopérer avec un arbre d'entrée, non représenté, du réducteur 19, dans une configuration assemblée de l'actionneur électromécanique 11.

Des moyens de commande de l'actionneur électromécanique 11, permettant le déplacement de l'écran 2 du dispositif d'occultation 3, comprennent au moins l'unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

L'unité électronique de contrôle 15 comprend également un module de réception d'ordres, en particulier d'ordres radioélectriques émis par un émetteur d'ordres, tel que la télécommande 14 destinée à commander l'actionneur électromécanique 11 ou l'une des unités de commande locale 12 ou centrale 13.

Le module de réception d'ordres peut également permettre la réception d'ordres transmis par des moyens filaires.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

L'actionneur électromécanique 11 comprend également un carter 17, en particulier de forme tubulaire.

Le carter 17 de l'actionneur électromécanique 11 est, préférentiellement, de forme cylindrique et, plus particulièrement, de section circulaire.

Dans un mode de réalisation, le carter 17 est réalisé dans un matériau électriquement conducteur, notamment métallique.

La matière du carter de l'actionneur électromécanique n'est pas limitative et peut être différente. Il peut, en particulier, s'agir d'une matière plastique.

Le carter 17 est creux et configuré pour loger l'ensemble 27.

Le carter 17 comprend une première extrémité 17a et une deuxième extrémité 17b. La deuxième extrémité 17b est opposée à la première extrémité 17a.

L'arbre de sortie 20 de l'actionneur électromécanique 11 dépasse du carter 17 au niveau de la première extrémité 17a du carter 17, dans la configuration assemblée de l'actionneur électromécanique 11.

Ainsi, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, l'arbre de sortie 20 de l'actionneur électromécanique 11 est accouplé, par un élément de liaison 22, au tube d'enroulement 4, en particulier un élément de liaison en forme de roue.

L'actionneur électromécanique 11 est alimenté en énergie électrique par un réseau d'alimentation électrique du secteur, ou encore au moyen d'une batterie, pouvant être rechargée, par exemple, par un panneau photovoltaïque. L'actionneur électromécanique 11 permet de déplacer l'écran 2 du dispositif d'occultation 3.

Ici, l'actionneur électromécanique 11 comprend un câble d'alimentation électrique 18 permettant son alimentation en énergie électrique à partir du réseau d'alimentation électrique du secteur.

Avantageusement, l'actionneur électromécanique 11 comprend également un frein 24.

Ici, le frein 24 de l'actionneur électromécanique 11 fait partie intégrante de l'ensemble 27.

A titre d'exemple nullement limitatif, le frein 24 peut être un frein à ressort, un frein à came ou un frein électromagnétique.

Avantageusement, l'actionneur électromécanique 11 peut également comprendre un dispositif de détection de fin de course et/ou d'obstacle, pouvant être mécanique ou électronique.

L'actionneur électromécanique 11 comprend également un élément d'obturation 21 de la deuxième extrémité 17b du carter 17.

L'élément d'obturation 21 dépasse du carter 17 au niveau de la deuxième extrémité 17b du carter 17, dans la configuration assemblée de l'actionneur électromécanique 11.

En pratique, l'élément d'obturation 21 est disposé à une extrémité de l'actionneur électromécanique 11 opposée à celle au niveau de laquelle l'arbre de sortie 20 fait saillie à partir du carter 17.

Ici, le carter 17 de l'actionneur électromécanique 11 est fixé à un support 23, en particulier une joue, du coffre 9 du dispositif d'occultation 3 au moyen de l'élément d'obturation 21 formant un support de couple, en particulier une tête d'obturation et de reprise de couple. Dans un tel cas où l'élément d'obturation 21 forme un support de couple, l'élément d'obturation 21 est également appelé un point fixe de l'actionneur électromécanique 11.

Avantageusement, l'élément d'obturation 21 est réalisé en matière plastique et, plus particulièrement, par moulage.

Dans l'exemple de réalisation illustré aux figures 3 à 6 et 10 à 11, l'élément d'obturation 21 est une unique pièce, en particulier de type monobloc.

Ici, l'élément d'obturation 21 est une pièce de révolution.

L'élément d'obturation 21 comprend une première partie 21a configurée pour coopérer avec le carter 17 de l'actionneur électromécanique 11 et une deuxième partie 21b configurée pour coopérer avec le support 23.

Au moins la première partie 21a de l'élément d'obturation 21 est de forme générale cylindrique et est disposée à l'intérieur du carter 17 de l'actionneur électromécanique 11, dans la configuration assemblée de l'actionneur électromécanique 11.

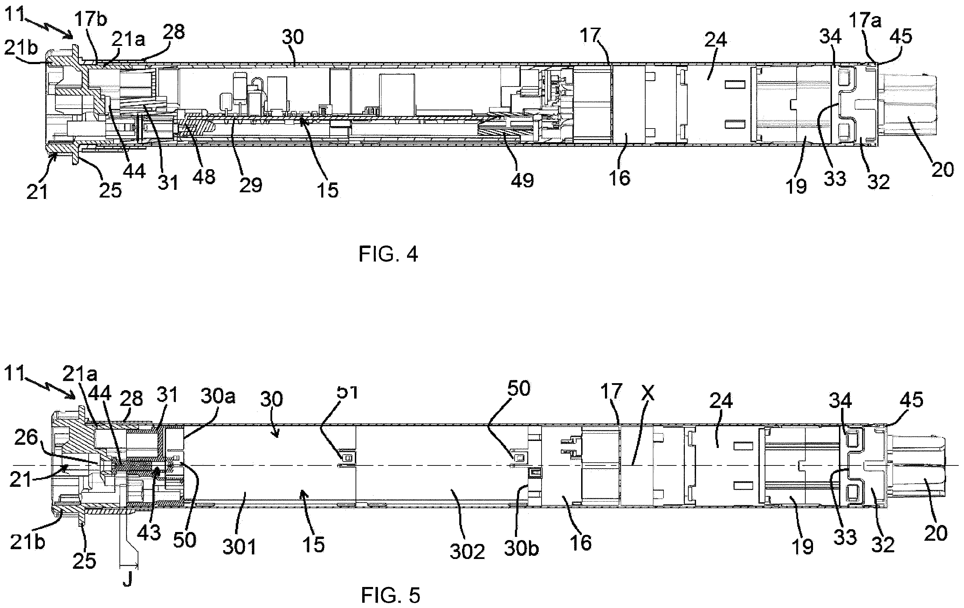

Avantageusement, l'élément d'obturation 21 comprend une butée 25 configurée pour coopérer avec le carter 17, au niveau de la deuxième extrémité 17b du carter 17, dans la configuration assemblée de l'actionneur électromécanique 11, en particulier par l'intermédiaire d'une couronne 28, comme illustré aux figures 4 à 6 et 10.

Ainsi, la butée 25 de l'élément d'obturation 21 permet de limiter l'enfoncement de la première partie 21a de l'élément d'obturation 21 dans le carter 17.

En outre, la butée 25 de l'élément d'obturation 21 délimite les première et deuxième parties 21a, 21b de l'élément d'obturation 21.

Ainsi, seule la première partie 21a de l'élément d'obturation 21 est disposée à l'intérieur du carter 17 de l'actionneur électromécanique 11, suite à l'emmanchement de l'élément d'obturation 21 à l'intérieur du carter 17, jusqu'à la butée 25.

Ici, la butée 25 de l'élément d'obturation 21 est réalisée sous la forme d'une collerette, en particulier de forme cylindrique et plane.

En variante, non représentée, l'élément d'obturation 21 comprend au moins deux pièces. La première pièce de l'élément d'obturation 21 comprend la première partie 21a de l'élément d'obturation 21 configurée pour coopérer avec le carter 17 de l'actionneur électromécanique 11. La deuxième pièce de l'élément d'obturation 21 comprend la deuxième partie 21b de l'élément d'obturation 21 configurée pour coopérer avec le support 23.

Avantageusement, l'actionneur électromécanique 11 comprend la couronne 28. La couronne 28 est disposée autour du carter 17 de l'actionneur électromécanique 11 et au niveau de la deuxième extrémité 17b du carter 17.

Ici, le tube d'enroulement 4 est entraîné en rotation autour de l'axe de rotation X et du carter 17 de l'actionneur électromécanique 11 soutenu par l'intermédiaire de deux liaisons pivot. La première liaison pivot est réalisée au niveau d'une première extrémité du tube d'enroulement 4 au moyen de la couronne 28. La couronne 28 permet ainsi de réaliser un palier. La deuxième liaison pivot, non représentée, est réalisée au niveau d'une deuxième extrémité du tube d'enroulement 4.

L'actionneur électromécanique 11 comprend également un élément d'interface 31, comme illustré aux figures 4 à 8, 10 et 11. L'élément d'interface 31 est disposé entre l'élément d'obturation 21 et, plus particulièrement, la première partie 21a de l'élément d'obturation 21, et l'unité électronique de contrôle 15, suivant la direction de l'axe de rotation X.

Ici, l'élément d'interface 31 de l'actionneur électromécanique 11 fait partie intégrante de l'ensemble 27.

Ici, et tel qu'illustré aux figures 4 et 5, l'unité électronique de contrôle 15, le moteur électrique 16, le réducteur 19, l'élément d'interface 31 et le frein 24 sont disposés à l'intérieur du carter 17 de l'actionneur électromécanique 11.

Préférentiellement, les organes 31, 15, 16, 19, 24, 20 de l'ensemble 27 sont assemblés entre eux dans un ordre prédéterminé. L'ordre prédéterminé d'assemblage des organes 31, 15, 16, 19, 24, 20 de l'ensemble 27 comprend, en premier lieu, l'assemblage de l'élément d'interface 31 avec l'unité électronique de contrôle 15, puis l'assemblage de l'unité électronique de contrôle 15 avec le moteur électrique 16, puis l'assemblage du moteur électrique 16 avec le réducteur 19 et l'assemblage du réducteur 19 avec l'arbre de sortie 20.

Dans l'exemple de réalisation illustré aux figures 3 à 5 et 11, le frein 24 est disposé entre le moteur électrique 16 et le réducteur 19.

En variante, non représentée, le frein 24 est disposé entre le réducteur 19 et l'arbre de sortie 20.

Ici, chaque organe 31, 15, 16, 19, 24, 20 de l'ensemble 27 présente un axe qui est confondu avec l'axe de rotation X, dans la configuration assemblée de l'actionneur électromécanique 11. L'axe de chacun des organes 15, 16, 19, 24, 20 de l'ensemble 27 n'est pas représenté sur les figures 3 à 11, de sorte à simplifier la lecture de celles-ci.

Avantageusement, l'unité électronique de contrôle 15 comprend un boîtier 30 et une carte électronique 29. La carte électronique 29 est disposée à l'intérieur du boîtier 30, dans la configuration assemblée de l'unité électronique de contrôle 15.

Ainsi, le boîtier 30 de l'unité électronique de contrôle 15 permet de protéger la carte électronique 29, lors de l'assemblage de l'actionneur électromécanique 11 et suite à l'assemblage de ce dernier, ainsi que d'assurer la rigidité de l'ensemble 27.

En outre, le boîtier 30 de l'unité électronique de contrôle 15 permet d'isoler électriquement la carte électronique 29 par rapport au carter 17.

Ici et comme illustré aux figures 5 et 11, le boîtier 30 comprend un premier tronçon 301, réalisé sous la forme d'un premier tube creux, et un deuxième tronçon 302, réalisé sous la forme d'un deuxième tube creux.

Les premier et deuxième tronçons 301, 302 sont configurés pour loger la carte électronique 29, dans la configuration assemblée de l'unité électronique de contrôle 15.

En variante, non représentée, le boîtier 30 comprend un unique tronçon.

Le boîtier 30 de l'unité électronique de contrôle 15 est, préférentiellement, de forme cylindrique et, plus particulièrement, de section circulaire.

Préférentiellement, le diamètre extérieur du boîtier 30 de l'unité électronique de contrôle 15 est inférieur au diamètre intérieur du carter 17 de l'actionneur électromécanique 11, de sorte que le boîtier 30 puisse être inséré dans le carter 17 de l'actionneur électromécanique 11, lors de l'assemblage de l'actionneur électromécanique 11.

Ici, le boîtier 30 de l'unité électronique de contrôle 15 comprend une première extrémité 30a configurée pour coopérer avec l'élément d'interface 31 et une deuxième extrémité 30b configurée pour coopérer avec le moteur électrique 16.

En outre, la carte électronique 29 est configurée pour coopérer avec un connecteur électrique 48 de l'élément d'interface 31, dans la configuration assemblée de l'actionneur électromécanique 11. En outre, la carte électronique 29 est configurée pour coopérer avec un connecteur électrique 49 du moteur électrique 16, dans la configuration assemblée de l'actionneur électromécanique 11.

Avantageusement, le moteur électrique 16 présente un corps 16c, comme illustré à la figure 11. En outre, le corps 16c du moteur électrique 16 est, préférentiellement, de forme cylindrique et, plus particulièrement, de section circulaire.

Préférentiellement, le diamètre extérieur du corps 16c du moteur électrique 16 est inférieur au diamètre intérieur du carter 17 de l'actionneur électromécanique 11, de sorte que le corps 16c du moteur électrique 16 puisse être inséré dans le carter 17 de l'actionneur électromécanique 11, lors de l'assemblage de l'actionneur électromécanique 11.

Avantageusement, le réducteur 19 présente un corps 19c, comme illustré à la figure 11. En outre, le corps 19c du réducteur 19 est, préférentiellement, de forme cylindrique et, plus particulièrement, de section circulaire.

Préférentiellement, le diamètre extérieur du corps 19c du réducteur 19 est inférieur au diamètre intérieur du carter 17 de l'actionneur électromécanique 11, de sorte que le corps 19c du réducteur 19 puisse être inséré dans le carter 17 de l'actionneur électromécanique 11, lors de l'assemblage de l'actionneur électromécanique 11.

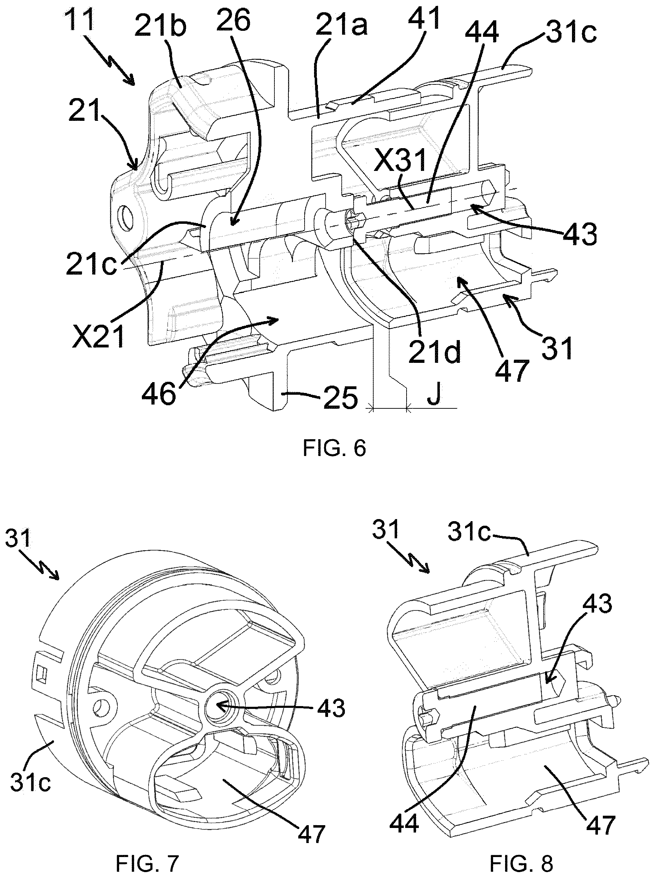

Avantageusement, l'élément d'interface 31 présente un corps 31c, comme illustré aux figures 6 à 8 et 11. En outre, le corps 31c de l'élément d'interface 31 est, préférentiellement, de forme cylindrique et, plus particulièrement, de section circulaire.

Préférentiellement, le diamètre extérieur du corps 31c de l'élément d'interface 31 est inférieur au diamètre intérieur du carter 17 de l'actionneur électromécanique 11, de sorte que le corps 31c de l'élément d'interface 31 puisse être inséré dans le carter 17 de l'actionneur électromécanique 11, lors de l'assemblage de l'actionneur électromécanique 11.

Avantageusement, le frein 24 présente un corps 24c, comme illustré à la figure 11. En outre, le corps 24c du frein 24 est, préférentiellement, de forme cylindrique et, plus particulièrement, de section circulaire.

Préférentiellement, le diamètre extérieur du corps 24c du frein 24 est inférieur au diamètre intérieur du carter 17 de l'actionneur électromécanique 11, de sorte que le corps 24c du frein 24 puisse être inséré dans le carter 17 de l'actionneur électromécanique 11, lors de l'assemblage de l'actionneur électromécanique 11.

Avantageusement, le corps 31c de l'élément d'interface 31, le boîtier 30 de l'unité électronique de contrôle 15, le corps 16c du moteur électrique 16, le corps 19c du réducteur 19 et, éventuellement, le corps 24c du frein 24 sont assemblés entre eux au moyen d'éléments de fixation 50, en particulier par encliquetage élastique, de sorte à former l'ensemble 27.

Ainsi, les éléments de fixation 50 des différents organes 31, 15, 16, 19, 24 de l'ensemble 27 permettent de solidariser en rotation et en translation ces organes 31, 15, 16, 19, 24 entre eux.

De cette manière, suite à la fixation des organes 31, 15, 16, 19, 24 de l'ensemble 27 l'un par rapport à l'autre, les liaisons entre ces organes 31, 15, 16, 19, 24 de l'ensemble 27 sont sans débattement axial, hormis les tolérances d'assemblage des organes 31, 15, 16, 19, 24 l'un par rapport à l'autre.

En outre, l'assemblage des différents organes 31, 15, 16, 19, 24 de l'ensemble 27 au moyen des éléments de fixation 50 permet de pouvoir introduire l'ensemble 27, en une seule opération, dans le carter 17, suivant un mouvement de translation.

Ici, les éléments de fixation 50 par encliquetage élastique sont réalisés au moyen de languettes et de pions. Chaque languette comprend une ouverture configurée pour coopérer avec l'un des pions.

Ici, l'un des organes de l'ensemble 27 est assemblé à un autre des organes de l'ensemble 27 au moyen des éléments de fixation 50 par encliquetage élastique, ces éléments de fixation 50 pouvant être au nombre de quatre et décalés angulairement d'un angle de 90° autour de l'axe de rotation X.

Le nombre et la position angulaire des éléments de fixation par encliquetage élastique entre deux des organes de l'ensemble ne sont pas limitatifs et peuvent être différents, en particulier, ces éléments de fixation peuvent être au nombre de trois et décalés angulairement d'un angle de 120° autour de l'axe de rotation.

Par ailleurs, le premier tronçon 301 et le deuxième tronçon 302 du boîtier 30 de l'unité électronique de contrôle 15 sont également assemblés entre eux au moyen d'éléments de fixation 51 par encliquetage élastique, de sorte à former le boîtier 30 et, plus particulièrement, une partie de l'ensemble 27.

Ainsi, les éléments de fixation 51 par encliquetage élastique des premier et deuxième tronçons 301, 302 du boîtier 30 permettent de solidariser en rotation et en translation ces premier et deuxième tronçons 301, 302 entre eux.

Préférentiellement, le diamètre extérieur, respectivement, du corps 31c de l'élément d'interface 31, du boîtier 30 de l'unité électronique de contrôle 15, du corps 16c du moteur électrique 16, du corps 19c du réducteur 19 et du corps 24c du frein 24 présente une même valeur.

Avantageusement, l'actionneur électromécanique 11 comprend également un élément de maintien 32. L'élément de maintien 32 est assemblé au niveau de la première extrémité 17a du carter 17. L'élément de maintien 32 comprend une première butée 33 configurée pour coopérer avec l'ensemble 27 et, plus particulièrement, avec le réducteur 19, dans la configuration assemblée de l'actionneur électromécanique 11.

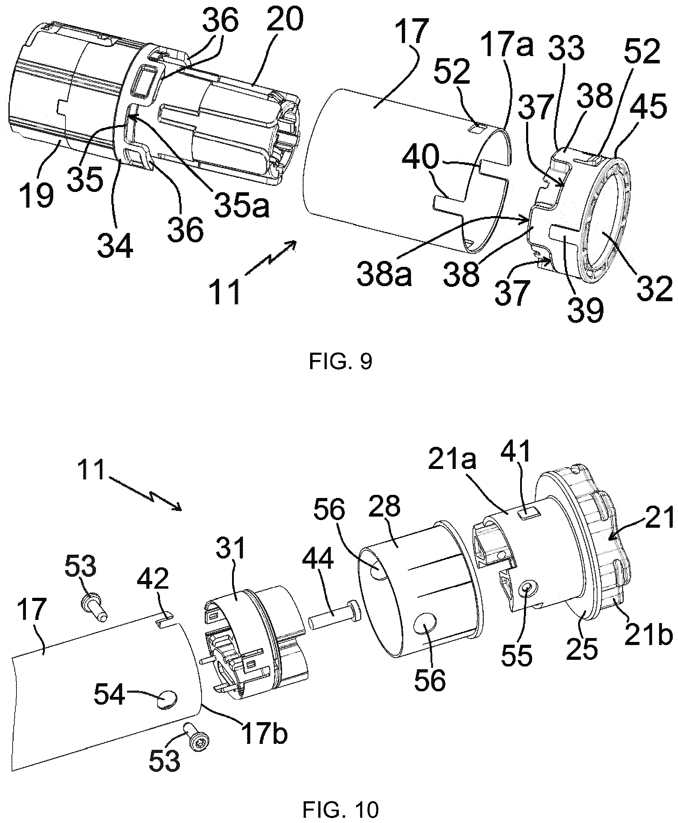

Dans l'exemple de réalisation illustré aux figures 4, 5, 9 et 11, l'ensemble 27 et, plus particulièrement, le réducteur 19 comprend un embout 34 configuré pour coopérer avec l'élément de maintien 32, au niveau de la première extrémité 17a du carter 17, dans la configuration assemblée de l'actionneur électromécanique 11. Sur la figure 9, seule une partie du carter 17 est représentée, à proximité de son extrémité 17a.

Ici, l'embout 34 comprend des encoches 35 et des languettes 36, disposées alternativement autour de l'axe de rotation X, configurées pour coopérer, respectivement, avec des languettes 38 et des encoches 37 de l'élément de maintien 32.

Ainsi, les languettes 38 de l'élément de maintien 32 sont configurées pour s'engager dans les encoches 35 de l'embout 34, dans la configuration assemblée de l'actionneur électromécanique 11. En outre, les languettes 36 de l'embout 34 sont configurées pour s'engager dans les encoches 37 de l'élément de maintien 32, dans la configuration assemblée de l'actionneur électromécanique 11.

Dans un tel cas, la première butée 33 de l'élément de maintien 32 configurée pour coopérer avec l'ensemble 27 et, plus particulièrement, avec le réducteur 19, dans la configuration assemblée de l'actionneur électromécanique 11, est réalisée par une paroi d'extrémité 38a de chacune des languettes 38, ces parois d'extrémité 38a venant en appui contre des parois de fond 35a de chacune des encoches 35 de l'embout 34.

Ici, l'embout 34 comprend quatre encoches 35 décalées angulairement d'un angle de 90°, autour de l'axe de rotation X, et quatre languettes 36 décalées angulairement d'un angle de 90°, autour de l'axe de rotation X. En outre, l'élément de maintien 32 comprend quatre encoches 37 décalées angulairement d'un angle de 90°, autour de l'axe de rotation X, et quatre languettes 38 décalées angulairement d'un angle de 90°, autour de l'axe de rotation X.

Le nombre et la position angulaire des encoches et des languettes de l'embout et de l'élément de maintien ne sont pas limitatifs et peuvent être différents, en particulier, ces encoches et languettes peuvent être au nombre de trois et décalées angulairement d'un angle de 120° autour de l'axe de rotation.

En outre, l'élément de maintien 32 comprend des crans 39, chacun en forme de saillie radiale, configurés pour coopérer avec des premières échancrures 40 du carter 17. Les premières échancrures 40 sont ménagées au niveau de la première extrémité 17a du carter 17.

Ici, l'élément de maintien 32 comprend deux crans 39 diamétralement opposés par rapport à l'axe de rotation X. En outre, le carter 17 comprend deux premières échancrures 40 diamétralement opposées par rapport à l'axe de rotation X.

De cette manière, un tel assemblage de l'embout 34, de l'élément de maintien 32 et du carter 17 permet de bloquer en rotation l'ensemble 27 par rapport au carter 17 et, plus particulièrement, le réducteur 19 par rapport au carter 17.

Avantageusement, l'élément de maintien 32 comprend une deuxième butée 45 configurée pour coopérer avec le carter 17, au niveau de la première extrémité 17a du carter 17, dans la configuration assemblée de l'actionneur électromécanique 11.

Ainsi, la deuxième butée 45 de l'élément de maintien 32 permet de limiter l'enfoncement de l'élément de maintien 32 dans le carter 17.

Ici, la deuxième butée 45 de l'élément de maintien 32 est réalisée sous la forme d'une collerette, en particulier de forme cylindrique et plane, perpendiculaire à l'axe de rotation X, dans la configuration assemblée de l'actionneur électromécanique 11.

Par ailleurs, l'élément de maintien 32 et le carter 17 sont également assemblés entre eux au moyen d'éléments de fixation 52, en particulier par encliquetage élastique.

Ainsi, l'assemblage de l'élément de maintien 32 avec le carter 17 permet de bloquer en translation l'élément de maintien 32 et, plus particulièrement, l'ensemble 27 par rapport au carter 17 et, plus particulièrement, par rapport à la première extrémité 17a du carter 17.

De cette manière, suite à la fixation de l'élément de maintien 32 par rapport au carter 17, l'élément de maintien 32 sert de butée pour l'ensemble 27, lors du coulissement de l'ensemble 27 à l'intérieur du carter 17, suivant la direction axiale de l'actionneur électromécanique 11, à partir de la deuxième extrémité 17b du carter 17 vers la première extrémité 17a du carter 17.

Par ailleurs, l'élément d'obturation 21 et, plus particulièrement, la première partie 21a de l'élément d'obturation 21 comprend des crans 41, chacun en forme de saillie radiale, configurés pour coopérer avec des deuxièmes échancrures 42 du carter 17. Les deuxièmes échancrures 42 sont ménagées au niveau de la deuxième extrémité 17b du carter 17.

Ici, la première partie 21a de l'élément d'obturation 21 comprend deux crans 41 diamétralement opposés par rapport à l'axe de rotation X. En outre, le carter 17 comprend deux deuxièmes échancrures 42 diamétralement opposées par rapport à l'axe de rotation X.

De cette manière, un tel assemblage de l'élément d'obturation 21 et du carter 17 permet de bloquer en rotation l'élément d'obturation 21 par rapport au carter 17.

Par ailleurs, l'élément d'obturation 21 et le carter 17 sont également assemblés entre eux au moyen d'éléments de fixation 53, en particulier par vissage.

De cette manière, l'assemblage de l'élément d'obturation 21 avec le carter 17 permet de bloquer en translation l'élément d'obturation 21 par rapport au carter 17 et, plus particulièrement, par rapport à la deuxième extrémité 17b du carter 17.

Ici, la fixation de l'élément d'obturation 21 avec le carter 17 est mise en œuvre au moyen de vis de fixation 53, pouvant être, par exemple, de type auto-taraudeuse. Dans la configuration assemblée de l'actionneur électromécanique 11, les vis de fixation 53 traversent des trous de passage 54 ménagés dans le carter 17 et sont vissées dans des trous de fixation 55 de l'élément d'obturation 21. En outre, les vis de fixation 53 traversent des trous de passage 56 ménagés dans la couronne 28.

En variante, non représentée, les éléments de fixation de l'élément d'obturation 21 avec le carter 17 peuvent être des rivets ou des éléments de fixation par encliquetage élastique.

Un tel assemblage de l'actionneur électromécanique 11 permet de prévoir un jeu J, en particulier axial, entre l'élément d'obturation 21 et l'élément d'interface 31, suivant la direction axiale de l'actionneur électromécanique 11, comme illustré aux figures 5 et 6.

Le jeu J permet de garantir l'assemblage de l'élément d'obturation 21 par rapport au carter 17.

Ici et de manière nullement limitative, le jeu J entre l'élément d'obturation 21 et l'élément d'interface 31, suivant la direction axiale de l'actionneur électromécanique 11, peut être de l'ordre de plus ou moins deux millimètres.

L'élément d'interface 31 comprend un premier logement 43 à l'intérieur duquel est disposé un élément d'inhibition 44 du jeu J entre l'élément d'obturation 21 et l'élément d'interface 31, suivant la direction axiale de l'actionneur électromécanique 11.

Ainsi, l'élément d'inhibition 44 du jeu J entre l'élément d'obturation 21 et l'élément d'interface 31, suivant la direction axiale de l'actionneur électromécanique 11, permet d'améliorer la tenue des organes 31, 15, 16, 19, 24, 20 de l'actionneur électromécanique 11 disposés à l'intérieur du carter 17 et de s'affranchir du risque de déconnexion électrique de l'unité électronique de contrôle 15 par rapport au câble d'alimentation électrique 18 et par rapport au moteur électrique 16, notamment lors d'un choc de l'actionneur électromécanique 11, pouvant intervenir lors d'une manipulation ou du transport de l'actionneur électromécanique 11, ou lors d'un fonctionnement anormal de l'actionneur électromécanique 11.

De cette manière, une telle construction de l'actionneur électromécanique 11 permet d'inhiber le jeu J entre l'élément d'obturation 21 et l'élément d'interface 31, suivant la direction axiale de l'actionneur électromécanique 11, suite à l'assemblage de l'actionneur électromécanique 11, de sorte à garantir un état fonctionnel de l'actionneur électromécanique 11, au cours des différentes phases de vie de l'actionneur électromécanique 11.

En outre, l'élément d'inhibition 44 permet de bloquer en translation l'élément d'interface 31 par rapport à l'élément d'obturation 21.

Ici, le premier logement 43 de l'élément d'interface 31 est de forme générale cylindrique, centré sur un axe longitudinal X31 de l'élément d'interface 31.

Par ailleurs, l'axe longitudinal X31 de l'élément d'interface 31 est confondu avec l'axe de rotation X du moteur électrique 16 de l'actionneur électromécanique 11, ou encore l'axe de rotation du tube d'enroulement 4, en configuration montée du dispositif d'entraînement motorisé 5.

Préférentiellement, l'élément d'obturation 21 comprend un premier logement 26 débouchant au niveau d'une première face 21c de l'élément d'obturation 21 et au niveau d'une deuxième face 21d de l'élément d'obturation 21.

Le premier logement 26 de l'élément d'obturation 21 est disposé en vis-à-vis de l'élément d'inhibition 44, dans la configuration assemblée de l'actionneur électromécanique 11, de sorte à permettre un ajustement en position de l'élément d'inhibition 44 à partir de l'extérieur de l'élément d'obturation 21.

Ainsi, le réglage en position de l'élément d'inhibition 44 par rapport à l'élément d'interface 31 et à l'élément d'obturation 21, suivant la direction axiale de l'actionneur électromécanique 11, peut être mis en œuvre à partir de l'extérieur de l'élément d'obturation 21 et, plus particulièrement, de l'actionneur électromécanique 11, en manœuvrant l'élément d'inhibition 44 au moyen d'un outil, non représenté, tel qu'un tournevis, qui traverse le premier logement 26 de l'élément d'obturation 21, comme expliqué ci-après.

De cette manière, le positionnement de l'élément d'inhibition 44 par rapport à l'élément d'interface 31 et à l'élément d'obturation 21, suivant la direction axiale de l'actionneur électromécanique 11, peut être mis en œuvre en fonction de la valeur du jeu J, sans avoir à démonter un ou plusieurs éléments de l'actionneur électromécanique 11.

Ici, le premier logement 26 de l'élément d'obturation 21 est de forme générale cylindrique, centré sur un axe longitudinal X21 de l'élément d'obturation 21.

Par ailleurs, l'axe longitudinal X21 de l'élément d'obturation 21 est confondu avec l'axe de rotation X du moteur électrique 16 de l'actionneur électromécanique 11, ou encore l'axe de rotation du tube d'enroulement 4, en configuration montée du dispositif d'entraînement motorisé 5. En outre, l'axe longitudinal X21 de l'élément d'obturation 21 est confondu avec l'axe longitudinal X31 de l'élément d'interface 31, dans la configuration assemblée de l'actionneur électromécanique 11.

Avantageusement, l'élément d'inhibition 44 est configuré pour coopérer avec une face de l'élément d'obturation 21 et, plus particulièrement, la deuxième face 21d de l'élément d'obturation 21, suite à un ajustement en position de l'élément d'inhibition 44 par rapport à l'élément d'obturation 21, suivant la direction axiale de l'actionneur électromécanique 11, de sorte à inhiber le jeu J entre l'élément d'obturation 21 et l'élément d'interface 31.

Ainsi, l'inhibition du jeu J entre l'élément d'obturation 21 et l'élément d'interface 31 est mis en œuvre par le réglage en position de l'élément d'inhibition 44 par rapport à l'élément d'interface 31 et à l'élément d'obturation 21, suivant la direction axiale de l'actionneur électromécanique 11 et, plus particulièrement, la mise en appui de l'élément d'inhibition 44 contre la deuxième face 21d de l'élément d'obturation 21.

Préférentiellement, l'élément d'inhibition 44 est une vis. En outre, le premier logement 43 de l'élément d'interface 31 est un alésage.

Ici, l'élément d'inhibition 44 est une vis présentant un filetage métrique. En outre, le premier logement 43 de l'élément d'interface 31 est un alésage taraudé.

En variante, non représentée, l'élément d'inhibition 44 est une vis auto-taraudeuse. Dans ce cas, le premier logement 43 de l'élément d'interface 31 est un alésage lisse.

Dans un exemple de réalisation, la vis formant l'élément d'inhibition 44 est une vis identique aux vis formant les éléments de fixation 53 de l'élément d'obturation 21 avec le carter 17.

Ainsi, le nombre de modèles de vis pour la fabrication de l'actionneur électromécanique 11 est limité, de sorte à simplifier l'industrialisation et à éviter des risques d'erreur de référence.

En pratique, une tête de la vis formant l'élément d'inhibition 44 est configurée pour coopérer avec la deuxième face 21d de l'élément d'obturation 21, suite à un dévissage de la vis 44 par rapport à l'alésage 43 de l'élément d'interface 31, de sorte à inhiber le jeu J entre l'élément d'obturation 21 et l'élément d'interface 31.

Avantageusement, le premier logement 26 ménagé dans l'élément d'obturation 21 permet le passage d'un outil, en particulier d'un tournevis, de sorte à atteindre l'élément d'inhibition 44 et, plus particulièrement, permettre le dévissage de la vis formant l'élément d'inhibition 44.

Préférentiellement, l'élément d'inhibition 44 est assemblé sur l'élément d'interface 31 avant l'introduction de l'ensemble 27 à l'intérieur du carter 17.

Ainsi, l'opération d'assemblage de l'élément d'inhibition 44 sur l'élément d'interface 31 n'engendre pas un allongement du temps d'assemblage de l'ensemble 27 à l'intérieur du carter 17, puisque cette opération peut être mise en œuvre en temps masqué, au cours de la fabrication de l'actionneur électromécanique 11.

Ici, la vis 44 est vissée à l'intérieur du premier logement 43 de l'élément d'interface 31 avant l'introduction de l'ensemble 27 à l'intérieur du carter 17, en particulier jusqu'à la mise en appui de la tête de la vis 44 contre le rebord du premier logement 43 de l'élément d'interface 31.

Avantageusement, l'élément d'obturation 21 comprend un deuxième logement 46. Le deuxième logement 46 de l'élément d'obturation 21 est configuré pour permettre le passage du câble d'alimentation électrique 18.

En outre, l'élément d'interface 31 comprend un deuxième logement 47. Le deuxième logement 47 de l'élément d'interface 31 comprend en partie le premier connecteur électrique 48. Le premier connecteur électrique 48 ménagé dans le deuxième logement 47 de l'élément d'interface 31 est configuré pour coopérer avec un connecteur électrique du câble d'alimentation électrique 18.

Par ailleurs, le premier connecteur électrique 48 de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Ainsi, le connecteur électrique du câble d'alimentation électrique 18 est configuré pour coopérer avec le premier connecteur électrique 48 de l'élément d'interface 31, de sorte à alimenter en énergie électrique le moteur électrique 16, au moyen du câble d'alimentation électrique 18.

Dans un exemple de réalisation, non représenté, le deuxième logement 46 de l'élément d'obturation 21 est également configuré pour permettre le passage d'un câble d'échange de données.

Dans ce cas, l'élément d'interface 31 comprend un troisième logement. Le troisième logement de l'élément d'interface 31 comprend un deuxième connecteur électrique. Le deuxième connecteur électrique ménagé dans le troisième logement de l'élément d'interface 31 est configuré pour coopérer avec un connecteur électrique du câble d'échange de données.

Par ailleurs, toujours dans ce cas, le deuxième connecteur électrique de l'élément d'interface 31 est relié électriquement à l'unité électronique de contrôle 15, au moyen d'éléments de connexion électrique, en particulier au moyen de broches électriques, non représentées, configurés pour coopérer avec des pistes de la carte électronique 29 de l'unité électronique de contrôle 15.

Dans un tel cas où l'actionneur électromécanique 11 est relié au câble d'échange de données, celui-ci permet à l'unité électronique de contrôle 15 de recevoir et/ou d'émettre des données avec une unité de commande, en particulier avec l'unité de commande locale 12 et/ou l'unité de commande centrale 13, par une liaison filaire.

Ainsi, le connecteur électrique du câble d'échange de données est configuré pour coopérer avec le deuxième connecteur électrique de l'élément d'interface 31, de sorte à échanger des données entre au moins l'une des unités de commande 12, 13 et l'unité électronique de contrôle 15.

On décrit à présent un procédé d'assemblage de l'actionneur électromécanique tubulaire 11 conforme à un premier mode de réalisation de l'invention.

Le procédé d'assemblage comprend une étape d'assemblage de l'ensemble 27 à l'extérieur du carter 17, à partir de l'unité électronique de contrôle 15, du moteur électrique 16, du réducteur 19, de l'arbre de sortie 20 et, éventuellement, du frein 24.

Ainsi, l'assemblage de l'ensemble 27 à partir des différents organes 15, 16, 19, 24, 20 et, plus particulièrement, la fixation de ceux-ci entre eux par les éléments de fixation 50 est mis en œuvre en dehors du carter 17.

Puis, le procédé comprend une étape d'introduction de l'ensemble 27 à l'intérieur du carter 17, à partir de la deuxième extrémité 17b du carter 17 et jusqu'au dépassement de l'arbre de sortie 20 par rapport à la première extrémité 17a du carter 17, autrement dit au-delà de la première extrémité 17a du carter 17.

Suite à l'étape d'assemblage de l'ensemble 27, à partir des différents organes 15, 16, 19, 24, 20, et avant l'étape d'introduction de l'ensemble 27 à l'intérieur du carter 17, le procédé comprend une étape d'assemblage d'un élément d'interface 31 sur l'unité électronique de contrôle 15 appartenant à l'ensemble 27.

Ainsi, suite à l'assemblage de l'ensemble 27 à partir des différents organes 31, 15, 16, 19, 24, 20 et, plus particulièrement, la fixation de ceux-ci entre eux par les éléments de fixation 50, l'ensemble 27 est introduit à l'intérieur du carter 17 à partir de la deuxième extrémité 17b du carter 17 jusqu'au dépassement de l'arbre de sortie 20 par rapport à la première extrémité 17a du carter 17, suivant un mouvement de translation. Le mouvement de translation de l'ensemble 27 à l'intérieur du carter 17 est illustré par des flèches F à la figure 11. Il s'agit d'une translation axiale le long de l'axe de rotation X.

Ici, dans l'état assemblé de l'ensemble 27 à partir des organes 31, 15, 16, 19, 24, 20, l'ensemble 27 est mis en œuvre sans débattement axial de ces organes 31, 15, 16, 19, 24, 20 l'un par rapport à l'autre, hormis les tolérances d'assemblage de ces organes 31, 15, 16, 19, 24, 20 l'un par rapport à l'autre, puisque ces organes 31, 15, 16, 19, 24, 20 sont fixés l'un par rapport à l'autre au moyen des éléments de fixation 50.

Avantageusement, avant l'étape d'introduction de l'ensemble 27 à l'intérieur du carter 17, le procédé comprend une étape d'assemblage de l'élément de maintien 32 sur le carter 17, au niveau de la première extrémité 17a du carter 17.

Avantageusement, suite à l'étape d'introduction de l'ensemble 27 à l'intérieur du carter 17, le procédé comprend une étape de mise en appui du réducteur 19 appartenant à l'ensemble 27 contre la deuxième butée 45 de l'élément de maintien 32.

Suite à l'introduction de l'ensemble 27 à l'intérieur du carter 17, l'ensemble 27 est bloqué en rotation et en translation par rapport au carter 17, en particulier par l'élément de maintien 32 servant de butée.

Suite à l'étape d'assemblage de l'élément d'interface 31 sur l'unité électronique de contrôle 15, à l'étape d'introduction de l'ensemble 27 à l'intérieur du carter 17 et, plus particulièrement, à l'étape de mise en appui du réducteur 19 contre la deuxième butée 45 de l'élément de maintien 32, le procédé comprend une étape d'assemblage de l'élément d'obturation 21 sur le carter 17, au niveau de la deuxième extrémité 17b du carter 17, de sorte que l'élément d'interface 31 est disposé entre l'élément d'obturation 21 et l'unité électronique de contrôle 15.

Ainsi, suite au blocage en rotation et en translation de l'ensemble 27 par rapport au carter 17, l'élément d'obturation 21 est introduit en partie à l'intérieur du carter 17 jusqu'à la mise en appui de la butée 25 de l'élément d'obturation 21 contre la deuxième extrémité 17b du carter 17, bloqué en rotation, en particulier par l'introduction des crans 41 de l'élément d'obturation 21 dans les deuxièmes échancrures 42 du carter 17, puis bloqué en translation par rapport au carter 17, par la fixation de l'élément d'obturation 21 avec le carter 17, en particulier au moyen des éléments de fixation 53.

Avantageusement, l'étape d'assemblage de l'élément d'obturation 21 sur le carter 17 comprend une sous-étape de mise en appui de la butée 25 de l'élément d'obturation 21 contre le carter 17, en particulier contre la deuxième extrémité 17b du carter 17, et une sous-étape de fixation de l'élément d'obturation 21 avec le carter 17, en particulier par vissage.

Suite à l'étape d'assemblage de l'élément d'obturation 21 sur le carter 17, le procédé comprend une étape d'inhibition du jeu J entre l'élément d'obturation 21 et l'élément d'interface 31, suivant la direction axiale de l'actionneur électromécanique 11, par l'intermédiaire de l'élément d'inhibition 44 disposé à l'intérieur du premier logement 43 ménagé dans l'élément d'interface 31.

Avantageusement, l'étape d'inhibition du jeu J entre l'élément d'obturation 21 et l'élément d'interface 31 comprend une sous-étape d'ajustement en position de l'élément d'interface 31 par rapport à l'élément d'obturation 21 et, plus particulièrement, de l'élément d'inhibition 44 par rapport à l'élément d'obturation 21, suivant la direction axiale de l'actionneur électromécanique 11.

Ainsi, suite au blocage en rotation et en translation de l'élément d'obturation 21 par rapport au carter 17, le jeu J entre l'élément d'obturation 21 et l'élément d'interface 31 est rattrapé au moyen de l'élément d'inhibition 44, suivant la direction axiale de l'actionneur électromécanique 11.

Préférentiellement, dans le cas où l'élément d'inhibition 44 est une vis et le premier logement 43 de l'élément d'interface 31 est un alésage, la sous-étape d'ajustement en position de l'élément d'inhibition 44 par rapport à l'élément d'obturation 21 est mise en œuvre par une opération de dévissage de la vis 44 à l'intérieur de l'alésage 43.

En variante, la sous-étape d'ajustement en position de l'élément d'interface 31 par rapport à l'élément d'obturation 21 peut être mise en œuvre par une opération de vissage de la vis 44.

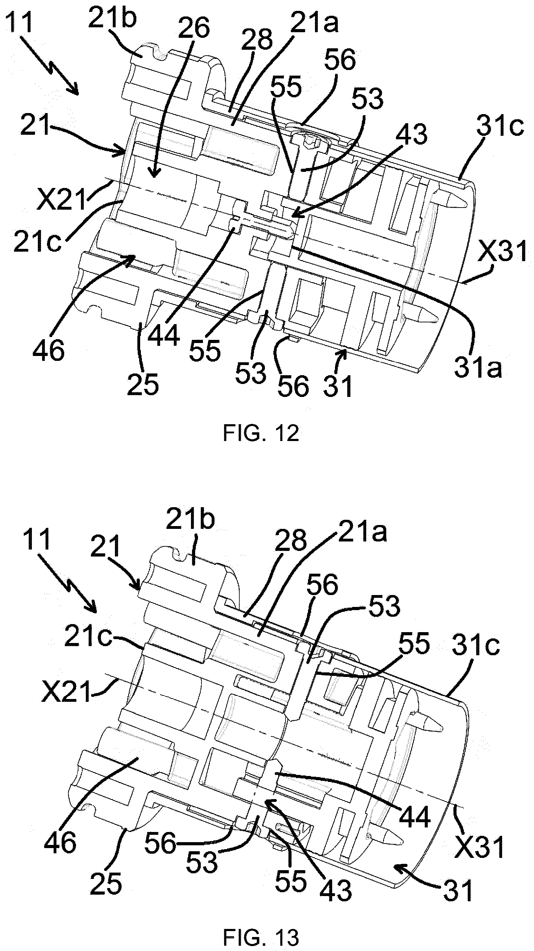

Dans un tel cas d'inhibition du jeu J par vissage et selon le deuxième mode de réalisation illustré à la figure 12, l'élément d'inhibition 44 est configuré pour être vissé au travers du premier logement 26 de l'élément d'obturation 21, de sorte que l'élément d'inhibition 44 débouche à l'intérieur du premier logement 43 ménagé dans l'élément d'interface 31, puis une extrémité de l'élément d'inhibition 44 est configurée pour être mise en appui contre une paroi 31a de l'élément d'interface 31, de sorte à inhiber le jeu J entre l'élément d'obturation 21 et l'élément d'interface 31, suivant la direction axiale de l'actionneur électromécanique 11.

Ici, l'élément d'inhibition 44 est une vis de pression. En outre, le premier logement 26 de l'élément d'obturation 21 est un trou de fixation par vissage.

Dans un tel cas d'inhibition du jeu J par vissage et selon le troisième mode de réalisation illustré à la figure 13, l'élément d'inhibition 44 correspond à au moins un élément de fixation 53.

Ici, l'inhibition du jeu J par vissage est mise en œuvre au moyen d'un seul des deux éléments de fixation 53. En variante, non représentée, l'inhibition du jeu J par vissage peut être mise en œuvre au moyen des deux éléments de fixation 53.

L'élément de fixation 53 constituant l'élément d'inhibition 44 est configuré pour être vissé au travers du premier logement 43 ménagé dans l'élément d'interface 31, suite au passage de cet élément de fixation 53 au travers de l'un des trous de passage 56 de la couronne 28 et au vissage de celui-ci dans l'un des trous de fixation 55 de l'élément d'obturation 21, de sorte à inhiber le jeu J et, plus particulièrement, à bloquer le jeu J entre l'élément d'obturation 21 et l'élément d'interface 31, suivant la direction axiale de l'actionneur électromécanique 11.

Ici, le premier logement 43 de l'élément d'interface 31 est disposé suivant une direction perpendiculaire à l'axe de rotation X et, plus particulièrement, à l'axe longitudinal X31 de l'élément d'interface 31.

Grâce à la présente invention, l'élément d'inhibition du jeu entre l'élément d'obturation et l'élément d'interface, suivant la direction axiale de l'actionneur électromécanique, permet d'améliorer la tenue des organes de l'actionneur électromécanique disposés à l'intérieur du carter et de s'affranchir du risque de déconnexion électrique de l'unité électronique de contrôle par rapport au câble d'alimentation électrique et par rapport au moteur électrique, notamment lors d'un choc de l'actionneur électromécanique, pouvant intervenir lors d'une manipulation ou du transport de l'actionneur électromécanique, ou lors d'un fonctionnement anormal de l'actionneur électromécanique.

De cette manière, une telle construction de l'actionneur électromécanique permet d'inhiber le jeu entre l'élément d'obturation et l'élément d'interface, suivant la direction axiale de l'actionneur électromécanique, suite à l'assemblage de l'actionneur électromécanique, de sorte à garantir un état fonctionnel de l'actionneur électromécanique, au cours des différentes phases de vie de l'actionneur électromécanique.

De nombreuses modifications peuvent être apportées aux exemples de réalisation décrits précédemment sans sortir du cadre de l'invention telle que définie par les revendications suivantes.

## Revendications

1. Actionneur électromécanique tubulaire (11) pour une installation domotique de fermeture ou de protection solaire, l'actionneur électromécanique (11) comprenant au moins :
- un ensemble (27), l'ensemble (27) comprenant :
o une unité électronique de contrôle (15),
o un moteur électrique (16),
o un réducteur (19), et
o un arbre de sortie (20),
- un carter (17), le carter (17) étant creux et configuré pour loger l'ensemble (27), le carter (17) comprenant une première extrémité (17a) et une deuxième extrémité (17b), la deuxième extrémité (17b) étant opposée à la première extrémité (17a), l'arbre de sortie (20) dépassant du carter (17) au niveau de la première extrémité (17a) du carter (17), dans une configuration assemblée de l'actionneur électromécanique (11), et
- un élément d'obturation (21) de la deuxième extrémité (17b) du carter (17), l'élément d'obturation (21) dépassant du carter (17) au niveau de la deuxième extrémité (17b) du carter (17), dans la configuration assemblée de l'actionneur électromécanique (11),
**caractérisé en ce que** :
- l'actionneur électromécanique (11) comprend également un élément d'interface (31), l'élément d'interface (31) étant disposé entre l'élément d'obturation (21) et l'unité électronique de contrôle (15), et
- l'élément d'interface (31) comprend un logement (43), à l'intérieur duquel est disposé un élément d'inhibition (44) d'un jeu (J) entre l'élément d'obturation (21) et l'élément d'interface (31), suivant la direction axiale de l'actionneur électromécanique (11).

2. Actionneur électromécanique tubulaire (11) pour une installation domotique de fermeture ou de protection solaire selon la revendication 1, **caractérisé en ce que** l'élément d'obturation (21) comprend un logement (26) débouchant au niveau d'une première face (21c) de l'élément d'obturation (21) et au niveau d'une deuxième face (21d) de l'élément d'obturation (21), le logement (26) de l'élément d'obturation (21) étant disposé en vis-à-vis de l'élément d'inhibition (44), dans la configuration assemblée de l'actionneur électromécanique (11), de sorte à permettre un ajustement en position de l'élément d'inhibition (44) à partir de l'extérieur de l'élément d'obturation (21).

3. Actionneur électromécanique tubulaire (11) pour une installation domotique de fermeture ou de protection solaire selon la revendication 1 ou la revendication 2, **caractérisé en ce que** l'élément d'inhibition (44) est configuré pour coopérer avec une face (21d) de l'élément d'obturation (21), suite à un ajustement en position de l'élément d'inhibition (44) par rapport à l'élément d'obturation (21), suivant la direction axiale de l'actionneur électromécanique (11), de sorte à inhiber le jeu (J) entre l'élément d'obturation (21) et l'élément d'interface (31).

4. Actionneur électromécanique tubulaire (11) pour une installation domotique de fermeture ou de protection solaire selon l'une quelconque des revendications 1 à 3, **caractérisé en ce que** l'élément d'inhibition (44) est une vis et **en ce que** le logement (43) de l'élément d'interface (31) est un alésage.

5. Actionneur électromécanique tubulaire (11) pour une installation domotique de fermeture ou de protection solaire selon l'une quelconque des revendications 1 à 4, **caractérisé en ce que** l'élément d'obturation (21) comprend une butée (25) configurée pour coopérer avec le carter (17), au niveau de la deuxième extrémité (17b) du carter (17), dans la configuration assemblée de l'actionneur (11).

6. Actionneur électromécanique tubulaire (11) pour une installation domotique de fermeture ou de protection solaire selon l'une quelconque des revendications 1 à 5, **caractérisé en ce que** l'actionneur électromécanique (11) comprend également un élément de maintien (32), l'élément de maintien (32) étant assemblé au niveau de la première extrémité (17a) du carter (17), l'élément de maintien (32) comprenant une première butée (33) configurée pour coopérer avec l'ensemble (27), dans la configuration assemblée de l'actionneur électromécanique (11).

7. Actionneur électromécanique tubulaire (11) pour une installation domotique de fermeture ou de protection solaire selon la revendication 6, **caractérisé en ce que** l'élément de maintien (32) comprend une deuxième butée (45) configurée pour coopérer avec le carter (17), au niveau de la première extrémité (17a) du carter (17), dans la configuration assemblée de l'actionneur (11).

8. Installation domotique de fermeture ou de protection solaire comprenant un écran (2), un tube d'enroulement (4) et un actionneur tubulaire (11), l'écran étant enroulable sur le tube d'enroulement (4) entraîné en rotation par l'actionneur électromécanique tubulaire (11), **caractérisée en ce que** l'actionneur électromécanique tubulaire (11) est conforme à l'une quelconque des revendications 1 à 7.

9. Procédé d'assemblage d'un actionneur électromécanique tubulaire (11) selon l'une quelconque des revendications 1 à 7 pour une installation domotique de fermeture ou de protection solaire,
l'actionneur électromécanique (11) comprenant au moins :
- un ensemble (27), l'ensemble (27) comprenant :
o une unité électronique de contrôle (15),
o un moteur électrique (16),
o un réducteur (19), et
o un arbre de sortie (20),
- un carter (17), le carter (17) étant creux et configuré pour loger l'ensemble (27), le carter (17) comprenant une première extrémité (17a) et une deuxième extrémité (17b), la deuxième extrémité (17b) étant opposée à la première extrémité (17a), l'arbre de sortie (20) dépassant du carter (17) au niveau de la première extrémité (17a) du carter (17), dans une configuration assemblée de l'actionneur électromécanique (11), et
- un élément d'obturation (21) de la deuxième extrémité (17b) du carter (17), l'élément d'obturation (21) dépassant du carter (17) au niveau de la deuxième extrémité (17b) du carter (17), dans la configuration assemblée de l'actionneur électromécanique (11),
le procédé comprenant au moins les étapes suivantes :
a) assemblage de l'ensemble (27) à l'extérieur du carter (17),
b) introduction de l'ensemble (27) à l'intérieur du carter (17), à partir de la deuxième extrémité (17b) du carter (17) et jusqu'au dépassement de l'arbre de sortie (20) par rapport à la première extrémité (17a) du carter (17),
**caractérisé en ce que** le procédé comprend également au moins :
- suite à l'étape a) d'assemblage de l'ensemble (27) et avant l'étape b) d'introduction de l'ensemble (27) à l'intérieur du carter (17), une étape c) d'assemblage d'un élément d'interface (31) sur l'unité électronique de contrôle (15) appartenant à l'ensemble (27),
- suite à l'étape c) d'assemblage de l'élément d'interface (31) sur l'unité électronique de contrôle (15) et suite à l'étape b) d'introduction de l'ensemble (27) à l'intérieur du carter (17), une étape d) d'assemblage de l'élément d'obturation (21) sur le carter (17), au niveau de la deuxième extrémité (17b) du carter (17), de sorte que l'élément d'interface (31) est disposé entre l'élément d'obturation (21) et l'unité électronique de contrôle (15), et
- suite à l'étape d) d'assemblage de l'élément d'obturation (21) sur le carter (17), une étape e) d'inhibition d'un jeu (J) entre l'élément d'obturation (21) et l'élément d'interface (31), suivant la direction axiale de l'actionneur électromécanique (11), par l'intermédiaire d'un élément d'inhibition (44) disposé à l'intérieur d'un logement (43) ménagé dans l'élément d'interface (31).

10. Procédé d'assemblage d'un actionneur électromécanique tubulaire (11) pour une installation domotique de fermeture ou de protection solaire selon la revendication 9, **caractérisé en ce que** l'étape e) d'inhibition du jeu (J) entre l'élément d'obturation (21) et l'élément d'interface (31) comprend une sous-étape e1) d'ajustement en position de l'élément d'interface (31) par rapport à l'élément d'obturation (21), suivant la direction axiale de l'actionneur électromécanique (11).

11. Procédé d'assemblage d'un actionneur électromécanique tubulaire (11) pour une installation domotique de fermeture ou de protection solaire selon la revendication 10, **caractérisé en ce que**, dans le cas où l'élément d'inhibition (44) est une vis, la sous-étape e1) d'ajustement en position de l'élément d'interface (31) par rapport à l'élément d'obturation (21) est mise en œuvre par une opération de dévissage ou de vissage de la vis (44).

## Patentansprüche

1. Rohrförmige elektromechanische Stellvorrichtung (11) für eine gebäudetechnische Verschluss- oder Sonnenschutzanlage, wobei die elektromechanische Stellvorrichtung (11) mindestens umfasst:
- eine Baugruppe (27), wobei die Baugruppe (27) umfasst:
o eine elektronische Steuereinheit (15),
o einen Elektromotor (16),
o ein Getriebe (19), und
o eine Ausgangswelle (20),
- ein Gehäuse (17), wobei das Gehäuse (17) hohl ist und ausgebildet ist, die Baugruppe (27) aufzunehmen, wobei das Gehäuse (17) ein erstes Ende (17a) und ein zweites Ende (17b) umfasst und das zweite Ende (17b) entgegengesetzt zum ersten Ende (17a) liegt, wobei die Ausgangswelle (20) in einer zusammengebauten Konfiguration der elektromechanischen Stellvorrichtung (11) an dem ersten Ende (17a) des Gehäuses (17) aus dem Gehäuse (17) herausragt; und
- ein Verschlusselement (21) des zweiten Endes (17b) des Gehäuses (17), wobei das Verschlusselement (21) in der zusammengebauten Konfiguration der elektromechanischen Stellvorrichtung (11) am zweiten Ende (17b) des Gehäuses (17) aus dem Gehäuse (17) herausragt, **dadurch gekennzeichnet, dass**:
- die elektromechanische Stellvorrichtung (11) auch ein Zwischenelement (31) umfasst, wobei das Zwischenelement (31) zwischen dem Verschlusselement (21) und der elektronischen Steuereinheit (15) angeordnet ist, und
- das Zwischenelement (31) einen Aufnahmeraum (43) umfasst, in dem ein Sperrelement (44) eines Spiels (J) zwischen dem Verschlusselement (21) und dem Zwischenelement (31) entlang der axialen Richtung der elektromechanischen Stellvorrichtung (11) angeordnet ist.

2. Rohrförmige elektromechanische Stellvorrichtung (11) für eine gebäudetechnische Verschluss- oder Sonnenschutzanlage nach Anspruch 1, **dadurch gekennzeichnet, dass** das Verschlusselement (21) einen Aufnahmeraum (26) aufweist, der an einer ersten Seite (21c) des Verschlusselements (21) und an einer zweiten Seite (21d) des Verschlusselements (21) mündet, wobei der Aufnahmeraum (26) des Verschlusselements (21) in der zusammengebauten Konfiguration der elektromechanischen Stellvorrichtung (11) gegenüber dem Sperrelement (44) angeordnet ist, um die Positionseinstellung des Sperrelements (44) von der Außenseite des Verschlusselements (21) aus zu ermöglichen.

3. Rohrförmige elektromechanische Stellvorrichtung (11) für eine gebäudetechnische Verschluss- oder Sonnenschutzanlage nach Anspruch 1 oder Anspruch 2, **dadurch gekennzeichnet, dass** das Sperrelement (44) ausgebildet ist, mit einer Fläche (21d) des Verschlusselements (21) nach einer Positionseinstellung des Sperrelementes (44) in Bezug auf das Verschlusselement (21) entlang der axialen Richtung der elektromechanischen Stellvorrichtung (11) zusammenzuwirken, um das Spiel (J) zwischen dem Verschlusselement (21) und dem Zwischenelement (31) zu hemmen.

4. Rohrförmige elektromechanischer Stellvorrichtung (11) für eine gebäudetechnische Verschluss- oder Sonnenschutzanlage nach einem beliebigen der Ansprüche 1 bis 3, **dadurch gekennzeichnet, dass** das Sperrelement (44) eine Schraube ist und dass der Aufnahmeraum (43) des Zwischenelements (31) eine Bohrung ist.

5. Rohrförmige elektromechanische Stellvorrichtung (11) für eine gebäudetechnische Verschluss- oder Sonnenschutzanlage nach einem der Ansprüche 1 bis 4, **dadurch gekennzeichnet, dass** das Verschlusselement (21) einen Anschlag (25) umfasst, der ausgebildet ist, in der zusammengebauten Konfiguration der Stellvorrichtung (11) mit dem Gehäuse (17) am zweiten Ende (17b) des Gehäuses (17) zusammenzuwirken.

6. Rohrförmige elektromechanische Stellvorrichtung (11) für eine gebäudetechnische Verschluss- oder Sonnenschutzanlage nach einem beliebigen der Ansprüche 1 bis 5, **dadurch gekennzeichnet, dass** die elektromechanische Stellvorrichtung (11) auch ein Halteelement (32) umfasst, wobei das Halteelement (32) am ersten Ende (17a) des Gehäuses (17) montiert ist und das Halteelement (32) einen ersten Anschlag (33) umfasst, der ausgebildet ist, in der zusammengebauten Konfiguration der elektromechanischen Stellvorrichtung (11) mit der Baugruppe (27) zusammenzuwirken.

7. Rohrförmige elektromechanische Stellvorrichtung (11) für eine gebäudetechnische Verschluss- oder Sonnenschutzanlage nach Anspruch 6, **dadurch gekennzeichnet, dass** das Halteelement (32) einen zweiten Anschlag (45) umfasst, der ausgebildet ist, in der zusammengebauten Konfiguration der Stellvorrichtung (11) an dem ersten Ende (17a) des Gehäuses (17) mit dem Gehäuse (17) zusammenzuwirken.

8. Gebäudetechnische Verschluss- oder Sonnenschutzanlage mit einem Schirm (2), einem Wickelrohr (4) und einer rohrförmige Stellvorrichtung (11), wobei der Schirm auf das Wickelrohr (4) aufrollbar ist, das durch die rohrförmige elektromechanische Stellvorrichtung (11) in Drehung versetzt wird, **dadurch gekennzeichnet, dass** die rohrförmige elektromechanische Stellvorrichtung (11) nach einem beliebigen der Ansprüche 1 bis 7 ausgeführt ist.

9. Verfahren zum Zusammenbau einer rohrförmigen elektromechanischen Stellvorrichtung (11) nach einem beliebigen der Ansprüche 1 bis 7 für eine gebäudetechnische Verschluss- oder Sonnenschutzanlage, wobei die elektromechanische Stellvorrichtung (11) mindestens umfasst:
- eine Baugruppe (27), wobei die Baugruppe (27) umfasst:
o eine elektronische Steuereinheit (15),
o einen Elektromotor (16),
o ein Getriebe (19), und
o eine Ausgangswelle (20),
- ein Gehäuse (17), wobei das Gehäuse (17) hohl ist und ausgebildet ist, die Baugruppe (27) aufzunehmen, wobei das Gehäuse (17) ein erstes Ende (17a) und ein zweites Ende (17b) umfasst und das zweite Ende (17b) entgegengesetzt zum ersten Ende (17a) liegt, wobei die Ausgangswelle (20) in einer zusammengebauten Konfiguration der elektromechanischen Stellvorrichtung (11) an dem ersten Ende (17a) des Gehäuses (17) aus dem Gehäuse (17) herausragt; und
- ein Verschlusselement (21) des zweiten Endes (17b) des Gehäuses (17), wobei das Verschlusselement (21) in der zusammengebauten Konfiguration der elektromechanischen Stellvorrichtung (11) am zweiten Ende (17b) des Gehäuses (17) aus dem Gehäuse (17) herausragt, wobei das Verfahren mindestens die folgenden Schritte umfasst:
a) Zusammensetzen der Baugruppe (27) außerhalb des Gehäuses (17),
b) Einführen der Baugruppe (27) in das Gehäuse (17) vom zweiten Ende (17b) des Gehäuses (17) aus und bis die Ausgangswelle (20) über das erste Ende (17a) des Gehäuses (17) hinausragt, **dadurch gekennzeichnet, dass** das Verfahren auch mindestens
umfasst:
- folgend auf den Schritt a) des Zusammensetzens der Baugruppe (27) und vor dem Schritt b) des Einsetzens der Baugruppe (27) in das Innere des Gehäuses (17) einen Schritt c) des Zusammensetzens eines Zwischenelements (31) mit der zur Baugruppe (27) gehörenden elektronischen Steuereinheit (15),
- folgend auf den Schritt c) des Zusammensetzens des Zwischenelements (31) mit der elektronischen Steuereinheit (15) und folgend auf den Schritt b) des Einsetzens der Baugruppe (27) in das Gehäuse (17) einen Schritt d) des Zusammenfügens des Verschlusselements (21) an das Gehäuse (17) am zweiten Ende (17b) des Gehäuses (17), so dass das Zwischenelement (31) zwischen dem Verschlusselement (21) und der elektronischen Steuereinheit (15) angeordnet ist, und
- nach dem Schritt d) des Zusammenfügens des Verschlusselements (21) an das Gehäuse (17) einen Schritt e) des Hemmens eines Spiels (J) zwischen dem Verschlusselement (21) und dem Zwischenelement (31) in der axialen Richtung der elektromechanischen Stellvorrichtung (11) mittels eines Sperrelements (44), das in einem in dem Zwischenelement (31) vorgesehenen Aufnahmeraum (43) angeordnet ist.

10. Verfahren zum Zusammenbau einer rohrförmigen elektromechanischen Stellvorrichtung (11) für eine gebäudetechnische Verschluss- oder Sonnenschutzanlage nach Anspruch 9, **dadurch gekennzeichnet, dass** der Schritt e) des Hemmens des Spiels (J) zwischen dem Verschlusselement (21) und dem Zwischenelement (31) einen Teilschritt e1) des Einstellens der Position des Zwischenelements (31) in Bezug auf das Verschlusselement (21) in axialer Richtung der elektromechanischen Stellvorrichtung (11) umfasst.

11. Verfahren zum Zusammenbau einer rohrförmigen elektromechanischen Stellvorrichtung (11) für eine gebäudetechnische Verschluss- oder Sonnenschutzanlage nach Anspruch 10, **dadurch gekennzeichnet, dass** in dem Fall, in dem das Sperrelement (44) eine Schraube ist, der Teilschritt e1) des Einstellens der Position des Zwischenelements (31) in Bezug auf das Verschlusselement (21) durch einen Vorgang des Herausschraubens oder Einschraubens der Schraube (44) durchgeführt wird.

## Claims

1. A tubular electromechanical actuator (11) for a closure or sun protection home automation installation, the electromechanical actuator (11) comprising at least:
- an assembly (27), the assembly (27) comprising:
o an electronic control unit (15),
o an electric motor (16),
o a reduction gear (19), and
o an output shaft (20),
- a casing (17), the casing (17) being hollow and configured to house the assembly (27), the casing (17) comprising a first end (17a) and a second end (17b), the second end (17b) being opposite the first end (17a), the output shaft (20) protruding past the casing (17) at the first end (17a) of the casing (17), in an assembled configuration of the electromechanical actuator (11), and
- a closure element (21) of the second end (17b) of the casing (17), the closure element (21) protruding past the casing (17) at the second end (17b) of the casing (17), in the assembled configuration of the electromechanical actuator (11),
**characterized in that**:
- the electromechanical actuator (11) also comprises an interface element (31), the interface element (31) being arranged between the closure element (21) and the electronic control unit (15), and
- the interface element (31) comprises a first accommodation (43), inside which an inhibiting element (44) is positioned inhibiting the play (J) between the closure element (21) and the interface element (31), along the axial direction of the electromechanical actuator (11).

2. The tubular electromechanical actuator (11) for a closure or sun protection home automation installation according to claim 1, **characterized in that** the closure element (21) comprises an accommodation (26) emerging at a first face (21c) of the closure element (21) and at a second face (21d) of the closure element (21), the accommodation (26) of the closure element (21) being positioned opposite the inhibiting element (44), in the assembled configuration of the electromechanical actuator (11), so as to allow a position adjustment of the inhibiting element (44) from the outside of the closure element (21).

3. The tubular electromechanical actuator (11) for a closure or sun protection home automation installation according to claim 1 or claim 2, **characterized in that** the inhibiting element (44) is configured to cooperate with a face (21d) of the closure element (21), following a position adjustment of the inhibiting element (44) relative to the closure element (21), along the axial direction of the electromechanical actuator (11), so as to inhibit the play (J) between the closure element (21) and the interface element (31).

4. The tubular electromechanical actuator (11) for a closure or sun protection home automation installation according to any one of claims 1 to 3, **characterized in that** the inhibiting element (44) is a screw and **in that** the housing (43) of the interface element (31) is a bore.

5. The tubular electromechanical actuator (11) for a closure or sun protection home automation installation according to any one of claims 1 to 4, **characterized in that** the closure element (21) comprises a stop (25) configured to cooperate with the casing (17), at the second end (17b) of the casing (17), in the assembled configuration of the actuator (11).

6. The tubular electromechanical actuator (11) for a closure or sun protection home automation installation according to any one of claims 1 to 5, **characterized in that** the electromechanical actuator (11) also comprises a retaining element (32), the retaining element (32) being assembled at the first end (17a) of the casing (17), the retaining element (32) comprising a first stop (33) configured to cooperate with the assembly (27), in the assembled configuration of the electromechanical actuator (11).

7. The tubular electromechanical actuator (11) for a closure or sun protection home automation installation according to claim 6, **characterized in that** the retaining element (32) comprises a second stop (45) configured to cooperate with the casing (17), at the first end (17a) of the casing (17), in the assembled configuration of the electromechanical actuator (11).

8. A home automation installation for closing or providing sun protection that comprises a screen (2), a winding tube (4) and a tubular electromechanical actuator (11), the screen being able to be wound on the winding tube (4) rotated by the tubular electromechanical actuator (11), **characterized in that** the tubular electromechanical actuator (11) is according to any one of claims 1 to 7.

9. A method for assembling a tubular electromechanical actuator (11) according to any one of claims 1 to 7 for a closure or sun protection home automation installation,
the electromechanical actuator (11) comprising at least:
- an assembly (27), the assembly (27) comprising:
o an electronic control unit (15),
o an electric motor (16),
o a reduction gear (19), and
o an output shaft (20),
- a casing (17), the casing (17) being hollow and configured to house the assembly (27), the casing (17) comprising a first end (17a) and a second end (17b), the second end (17b) being opposite the first end (17a), the output shaft (20) protruding past the casing (17) at the first end (17a) of the casing (17), in an assembled configuration of the electromechanical actuator (11), and
- a closure element (21) of the second end (17b) of the casing (17), the closure element (21) protruding past the casing (17) at the second end (17b) of the casing (17), in the assembled configuration of the electromechanical actuator (11),
the method comprising at least the following steps:
a) assembling the assembly (27) to the outside of the casing (17),
b) introducing the assembly (27) inside the casing (17), from the second end (17b) of the casing (17) and until the output shaft (20) protrudes relative to the first end (17a) of the casing (17),
**characterized in that** the method also comprises at least:
- after step a) for assembling the assembly (27) and before step b) for introducing the assembly (27) inside the casing (17), a step c) for assembling an interface element (31) on the electronic control unit (15) belonging to the assembly (27),
- after step c) for assembling the interface element (31) on the electronic control unit (15) and after step b) for introducing the assembly (27) inside the casing (17), a step d) for assembling the closure element (21) on the casing (17), at the second end (17b) of the casing (17), such that the interface element (31) is positioned between the closure element (21) and the electronic control unit (15), and
- after step d) for assembling the closure element (21) on the casing (17), a step e) for inhibiting play (J) between the closure element (21) and the interface element (31), along the axial direction of the electromechanical actuator (11), by means of an inhibiting element (44) positioned inside a housing (43) arranged in the interface element (31).

10. The method for assembling a tubular electromechanical actuator (11) for a closure or sun protection home automation installation according to claim 9, **characterized in that** step e) for inhibiting play (J) between the closure element (21) and the interface element (31) comprises a sub-step e1) for adjusting the position of the interface element (31) relative to the closure element (21), along the axial direction of the electromechanical actuator (11).

11. The method for assembling a tubular electromechanical actuator (11) for a closure or sun protection home automation installation according to claim 10, **characterized in that**, in the case where the inhibiting element (44) is a screw, sub-step e1) for adjusting the position of the interface element (31) relative to the closure element (21) is carried out through an unscrewing or screwing operation of the screw (44).
